# EUROPÄISCHE PATENTSCHRIFT

(11) **EP 3 954 250 B1**
(45) Veröffentlichungstag und Bekanntmachung des Hinweises auf die Patenterteilung: **25.06.2025**
(21) Anmeldenummer: 21190059.2
(22) Anmeldetag: 06.08.2021
(51) Int. Cl.: A47B 37/02, A47B 77/02, F24C 7/08, G03B 21/00, G06F 3/042, H04N 7/14

(54) **KÜCHENMÖBELANORDNUNG MIT PROJEKTIONSEINRICHTUNG ZUM PROJIZIEREN EINES BILDES AUF EINE PROJEKTIONSFLÄCHE**
KITCHEN FURNITURE ASSEMBLY WITH PROJECTION DEVICE FOR PROJECTING AN IMAGE ONTO A PROJECTION SURFACE
ENSEMBLE MEUBLE DE CUISINE POURVU DE DISPOSITIF DE PROJECTION PERMETTANT DE PROJETER UNE IMAGE SUR UNE SURFACE DE PROJECTION

(30) Priorität: 12.08.2020 DE 102020121261
(43) Veröffentlichungstag der Anmeldung: 16.02.2022
(73) Patentinhaber: Loch, Richard, 65936 Frankfurt (DE); Schmidt, Volker, 65719 Hofheim (DE)
(72) Erfinder: Loch, Richard, 65936 Frankfurt (DE)
(74) Vertreter: Freischem & Partner Patentanwälte mbB

(56) Entgegenhaltungen:
- WO-A1-2020/052761
- WO-A2-2010/135478
- DE-A1- 102009 026 447
- DE-A1- 102012 103 887
- DE-A1- 102013 200 372
- DE-A1- 102018 203 344
- JP-A- 2006 314 531
- US-A1- 2010 103 330
- US-A1- 2014 313 122

## Beschreibung

### Beschreibung

Die Erfindung betrifft eine Küchenmöbelanordnung mit Projektionseinrichtung zum Projizieren eines Bildes auf eine Projektionsfläche.

Küchenmöbelanordnungen der in Rede stehenden Art werden insbesondere auch als Küchenzeilen bezeichnet. Es handelt sich um Anordnungen von Schränken, die unterhalb einer Arbeitsplatte angeordnet sind, sowie oberhalb dieser Arbeitsplatte angeordneter Küchenmöbel, bei denen sich ebenfalls insbesondere um Küchenschränke handeln kann. Die unterhalb der Arbeitsplatte angeordneten Schränke werden regelmäßig auch als Küchenunterschränke und die oberhalb der Arbeitsplatte angeordneten Schränke als Küchenoberschränke bezeichnet. Zwischen den Küchenoberschränken und der der Arbeitsplatte besteht ein Abstand, sodass der Bereich oberhalb der Arbeitsplatte zum Arbeiten zugänglich ist. Unterhalb der Küchenarbeitsplatte können Geräte angeordnet sein, wie beispielsweise Herde und/oder Geschirrspüler. Auch in die Arbeitsplatte eingelassen können sich funktionale Elemente der Küche, wie beispielsweise Kochfelder und/oder Spülen befinden.

Küchenmöbelanordnungen der in Rede stehenden Art weisen ein Verkleidungselement auf, das im Bereich der hinteren Kante der Arbeitsplatte angeordnet ist. Das Verkleidungselement ist flächig, vertikal angeordnet und dient üblicherweise dazu, eine hinter der Küchenmöbelanordnung befindliche Wand zu kaschieren. Die Verkleidungselemente erstrecken sich typischerweise von der Arbeitsplatte aus nach oben.

Die in Rede stehenden Verkleidungselemente können eine sich vom Bereich der hinteren Kante der Arbeitsplatte nach oben erstreckende Projektionsfläche bilden. In diesen Fällen ist typischerweise oberhalb der Arbeitsplatte eine Projektionseinrichtung zum Projizieren eines Bildes auf die Projektionsfläche angeordnet. Bei der Projektionseinrichtung handelt es sich typischerweise um eine Projektionseinrichtung, die dazu eingerichtet ist, ein digitales Bilddatensignal zu empfangen und ein durch dieses Signal vorgegebenes Bild auf die Projektionsfläche zu projizieren. Es versteht sich, dass mit derartigen Projektionseinrichtungen auch das Abspielen von Bewegtbildern, wie Filmen, Animationen und dergleichen durch das Projizieren unterschiedlicher Bilder bzw. Teilbilder in schneller Folge möglich ist.

Nach dem Stand der Technik ist es bekannt, die Projektionsfläche mit optischen Methoden abzutasten, um Berührungen der projizierten Bilder, beispielsweise mit einem Finger, zu erkennen. Eine Datenverarbeitungseinrichtung kann die Berührungen der Bilder auswerten um beispielsweise Funktionen eines Computerprogramms aufzurufen, wenn ein bestimmtes Bild mit dem Finger berührt wird. Bekannte Dokumente aus dem Stand der Technik sind WO2010/135478A2, DE102012103887A1, JP2006314531A, DE102018203344A1, US2010/103330A1, DE102009026447A1, US2014/313122A1, DE102013200372A1 und WO2020/052761A1.

Die herkömmlichen Methoden weisen jedoch Nachteile auf. Insbesondere ist die Erkennung unpräzise und die erforderliche spezialisierte Hardware kostenintensiv.

Der Erfindung liegt daher die Aufgabe zugrunde, eine Küchenmöbelanordnung der in Rede stehenden Art aufzuzeigen, die sich kostengünstig realisieren lässt und eine zuverlässige Funktion aufweist.

Die Aufgabe wird gelöst durch eine Küchenmöbelanordnung mit den Merkmalen des Anspruchs 1. Die Merkmale der abhängigen Ansprüche betreffen vorteilhafte Ausführungsformen.

Es ist vorgesehen, dass das Verkleidungselement eine Sensoranordnung mit Sensoren zum Erfassen von Berührungen der Projektionsfläche durch Finger und/oder ein Anzeigegerät aufweist. Es hat sich gezeigt, dass mit einer derartigen Sensoranordnung am Verkleidungselement die gewünschte "Touchfunktion" günstiger realisiert werden kann, als über eine optische Erkennung des Fingers und oder Zeigegeräts.

Insbesondere ist vorteilhaft, wenn die Sensoranordnung auf der von der Projektionseinrichtung abgewandten Seite des Verkleidungselements angeordnet ist. Eine auf der von der Projektionseinrichtung und damit von der Projektionsfläche abgewandten Seite des Verkleidungselements angeordnete Sensoranordnung bietet zunächst den Vorteil, dass sie für den Nutzer der Küchenmöbelanordnung unsichtbar bleibt. Des Weiteren ist die Sensoranordnung in dieser Anordnung durch das Verkleidungselement vor Einflüssen seitens der Nutzung der Küchenmöbelanordnung geschützt, wie beispielsweise vor Spritzern von Flüssigkeiten, die bei der Zubereitung von Speisen oder beim Abspülen von Geschirr entstehen können.

Bei der Sensoranordnung kann es sich insbesondere um eine kapazitive Sensoranordnung handeln. Kapazitive Sensoranordnungen basieren auf der Detektion der Änderung elektrischer Felder durch Berührungen. Die Sensoren der Sensorenanordnungen können hierfür in oder auf geeigneten Medien, wie beispielsweise Kunststofffolien, angeordnet sein. Derartige Sensoranordnungen sind fertig konfektioniert in geeigneten Abmessungen erhältlich.

Vorzugsweise handelt es sich um eine projiziert-kapazitive Sensoranordnung. Bei einer projiziert-Kapazitiven Sensoranordnung wird die Erkennung von der Sensoranordnung durch das Verkleidungselement "hindurch projiziert". Mit anderen Worten, die Berührung der Projektionsfläche durch Finger und/oder ein Zeigegerät kann von der auf der von der Projektionseinrichtung abgewandten Seite des Verkleidungselements angeordneten kapazitiven Sensoranordnung erkannt werden.

Bei dem Verkleidungselement handelt es sich insbesondere um eine Platte aus Glas oder Quartz. Diese kann insbesondere eine Dicke von 6 mm bis zu 14 mm aufweisen. Es hat sich gezeigt, dass dieser Dickenbereich dick genug ist, um dem Verkleidungselement eine hinreichende Stabilität geben, andererseits jedoch noch eine gute Detektion von Berührungen, insbesondere unter Verwendung einer projiziert-kapazitiven Sensoranordnung ermöglicht.

Bei der Projektionseinrichtung kann sich insbesondere um einen Kurzdistanzprojektor und/oder einen Ultrakurzdistanzprojektor handeln. Derartige Projektoren können ein Bild auf die Projektionsfläche projizieren, wobei zur Projektion des Bildes verwendete Lichtstrahlen in einem äußerst flachen Winkel auf die Projektionsfläche auftreffen. Der Abstand der der Wand zugewandten Kante des Lichtaustrittes der Projektionseinrichtung von der Ebene der Projektionsfläche kann wenigstens 15 cm, und/oder höchstens 50 Zentimeter betragen. Dies bringt zum einen den Vorteil mit sich, dass durch den schrägen Verlauf des Lichteinfalls das projizierte Bild durch die Finger eines Bedieners nur wenig gestört wird. Ein weiterer Vorteil ist, dass sich eine derartige Sensoranordnung mit einer vergleichsweise üblichen Projektionseinrichtung kombinieren lässt. Diese sind kostengünstig und weisen gute Leistungen bei gleichzeitig geringem Bauraum auf. Dadurch ist es insbesondere möglich, dass die Projektionseinrichtung in einem abgeteilten Bereich eines oberhalb der Arbeitsplatte angeordneten Küchenmöbels eingebaut ist. Bei dem Küchenmöbel kann es sich insbesondere um einen Küchenoberschrank handeln. Bei einer derartigen Ausführung bleibt der obere Bereich der Küchenmöbelanordnung weitestgehend unbeeinträchtigt von der Projektionseinrichtung nutzbar.

Die Küchenmöbelanordnung weist ferner eine Datenverarbeitungseinrichtung auf, die dazu eingerichtet ist, ein Berührungsdatensignal der Sensoranordnung zu erfassten Berührungen zu empfangen und zu verarbeiten. Bei einer derartigen Datenverarbeitungseinrichtung kann es sich insbesondere um einen Computer handeln. Die Datenverarbeitungseinrichtung kann in diesem Zusammenhang insbesondere eine Netzwerkschnittstelle aufweisen, mit dem sie mit einem Netzwerk, insbesondere mit dem Internet, verbindbar ist.

Die Datenverarbeitungseinrichtung ist ferner dazu eingerichtet, das durch die Projektionseinrichtung projizierte Bild mittels eines Bilddatensignals zu steuern. Die Datenverarbeitungseinrichtung kann weiterhin mit der Projektionseinrichtung in einem gemeinsamen Gehäuse angeordnet sein. Ein Teil des Gehäuses kann aus einem transparenten Werkstoff, insbesondere einem Glas, sein, um die Projektion durch das Gehäuse zu ermöglichen. Eine derartige Einheit bietet den Vorteil, dass sie in einfacher Weise in eine Küchenmöbelanordnung integriert werden kann. Dabei kann es ausreichen, dass lediglich ein Ausschnitt im Bereich des Bodens eines Oberschrankes erfolgt. Die korrekte Positionierung des Ausschnitts und des Gehäuses im Oberschrank können beispielsweise mittels einer Schablone erfolgen. Hierdurch wird die Montierbarkeit durch handwerklich ausgebildetes Personal im Bereich des Küchenbaus gewährleistet, ohne dass dieses besondere Fachkenntnisse auf dem Gebiet der Elektronik besitzen muss.

Weiterhin kann in dem gemeinsamen Gehäuse eine Kamera und/oder ein Lautsprecher angeordnet sein. Auch der Einbau von Sensoren für beispielsweise Temperaturen oder Helligkeiten ist einem gemeinsamen Gehäuse möglich.

Die Datenverarbeitungseinrichtung ist dazu eingerichtet, die Position einer erfassten Berührung auf der Projektionsfläche einer Position auf dem projizierten Bild zuzuordnen. Die Zuordnung ermöglicht es der Datenverarbeitungseinrichtung beispielsweise zu erkennen, ob mit dem Finger ein bestimmtes an die Projektionsfläche projiziertes Symbol berührt worden ist.

Die Datenverarbeitungseinrichtung ist ferner dazu eingerichtet, in Abhängigkeit von der Zuordnung der Position einer erfassten Berührung zu einer Position auf dem projizierten Bild eine der Position auf dem projizierten Bild zugeordneten Funktion eines Computerprogramms aufzurufen. Mit anderen Worten, kann die Datenverarbeitungseinrichtung die Position einer erfassten Berührung auf der Projektionsfläche einer Position auf dem projizierten Bild zuordnen, der eine Funktion eines Computerprogramms zugeordnet ist, so ist die Datenverarbeitungseinrichtung dazu eingerichtet, dieses Computerprogramm aufzurufen. So lässt sich beispielsweise durch die Berührung eines Symbols in dem projizierten Bild ein Computerprogramm oder eine Funktion eines Computerprogramms starten. Bei dem Computerprogramm kann es sich um einen elektronischen Einkaufszettel handeln. Dieser kann über eine Netzwerkverbindung automatisiert Bestellungen auslösen. Weiterhin kann es sich um einen Kalender, ein E-Mail-Programm, ein elektronisches Kochrezept oder ein elektronisches Kochbuch, ein Programm zur Ernährungsberatung, ein Programm zur Durchführung von Videokonferenzen und/oder Videotelefonie, einen Streamingdienst oder ein Programm für assistiertes Kochen, ein Video oder eine Grafik betreffend die Zubereitung einer Speise, einen Social-Media Dienst o. ä. handeln. Alternativ und/oder ergänzend ist eine Bedienbarkeit der Datenverarbeitungseinrichtung über andere Benutzerschnittstellen, insbesondere über eine Sprachbefehlseingabe, möglich. Auch kann das Bild eine virtuelle Tastatur beinhalten, wobei durch die Berührung der Tasten der virtuellen Tastatur Tastatureingaben bei der Bedienung der Datenverarbeitungseinrichtung möglich sind. Auch können Nutzerkonten, beispielsweise für Social-Media-Anwendungen, in die Software der Datenverarbeitungseinrichtung eingebunden sein.

Auch kann eine Software für ein Mobiltelefon über eine Netzwerkschnittstelle, wie beispielsweise WLAN oder Bluetooth, mit der Datenverarbeitungseinrichtung verbunden sein und Softwarefunktionen der Datenverarbeitungseinrichtung auf dem Mobiltelefon nutzbar machen.

Die Küchenmöbelanordnung kann eine Auswertungseinrichtung zur Auswertung von Berührungssignalen der Sensoren der Sensoranordnung aufweisen. Eine derartige Auswertungseinrichtung ist dazu ausgebildet, aus den Berührungssignalen der Sensoren das Berührungsdatensignal zu erzeugen.

Dabei findet insbesondere eine Umwandlung analoger Signale in ein digitales Datensignal statt. Die Auswertungseinrichtung kann ein Bestandteil der Sensoranordnung sein, alternativ und/oder ergänzend kann eine separate Auswertungseinrichtung vorgesehen sein. Eine derartige Auswertungseinrichtung wandelt die analogen Berührungssignale der Sensoren, bei denen sich es sich in der Praxis um Messwerte von Kapazitäten handeln kann, in das digitale Berührungsdatensignal um. Derartige digitale Signale haben den Vorteil, dass sie praktisch verlustfrei und gegebenenfalls sogar drahtlos zu der Datenverarbeitungseinrichtung übertragen werden können. Zudem können Datensignale der in Rede stehenden Art von der Datenverarbeitungseinrichtung direkt verarbeitet werden, da sie bereits in digitaler Form vorliegen.

Damit die Zuordnung der Positionen, die durch die Sensoranordnung erfasst werden, zu den Positionen auf dem projizierten Bild "passen", müssen das projizierte Bild und die Sensoranordnung das gleiche Format, also das gleiche Verhältnis von Breite x Höhe, insbesondere die gleiche Bildauflösung, d.h. Breite x Höhe in Bildpunkten, aufweisen. Dann ist eine reibungslose Bearbeitung durch die Software gegeben. Unterscheiden sich die Formate und/oder Bildauflösungen, so könnte es zu Abweichungen in der Zuordnung zwischen der erfassten Berührungen und dem projizierten Bild kommen. Dies könnte beispielsweise zur Folge haben, dass eine falsche Funktion eines Computerprogramms gestartet wird.

Aufgrund der typischen Abmessungen in Rede stehender Küchenmöbelanordnungen ist es jedoch wünschenswert, eine durch Berührung bedienbare Fläche von einer möglichst großen Breite zur Verfügung zu stellen. Dementsprechend weist die durch die Sensoren der Sensoranordnung überwachte Fläche ein Verhältnis von Breite zur Höhe von wenigstens 18:9, insbesondere von wenigstens 21:9, auf. Durch diese Abmessungen der Sensoranordnung lässt sich eine großflächige berührungsempfindliche Projektionsfläche realisieren, ohne dass dabei eine größere Höhe der Projektionsfläche benötigt wird, als sie durch die Abmessungen typischer Küchenmöbelanordnungen der in Rede stehenden Art als praktikables Höchstmaß vorgegeben ist.

Projektionseinrichtungen sind in der Regel dazu ausgebildet, ein projiziertes Bild in einem bestimmten Verhältnis von Breite zu Höhe zu erzeugen. Um auf handelsübliche Projektionseinrichtungen, die zu einem verhältnismäßig günstigen Preis zur Verfügung stehen, zurückgreifen zu können, sollte das projizierte Bild ein Verhältnis von Breite zu Höhe von höchstens 16:9 aufweisen. Projektionseinrichtungen mit wesentlich größeren Verhältnissen von Breite zu Höhe hinsichtlich der Anzahl der Bildpunkte sind technisch zwar möglich und auch erhältlich, da diese doch in wesentlich kleineren Volumina hergestellt werden, sind sie erheblich teurer als Projektionseinrichtungen mit den vorstehend beschriebenen Verhältnissen.

Es hat sich gezeigt, dass trotz der Diskrepanzen der vorstehend beschriebenen Formate sowohl die vorstehend als günstig beschriebenen Verhältnisse für die Sensoranordnung wie auch die für das projizierte Bild ermöglicht werden können.

In dem Berührungsdatensignal können die Positionen der erfassten Berührungen Positionen in einem Punktraster zugeordnet sein. Hierbei ist es möglich, dass die durch die Sensoren der Sensoranordnung auf Berührungen überwachte Fläche lediglich einem Teilbereich des Punktrasters entspricht und die Position der erfassten Berührungen lediglich Positionen in diesem Teilbereich zugeordnet sind. Mit anderen Worten wird die durch die Sensoren der Sensoranordnung auf Berührungen überwachte Fläche lediglich auf einen Teilbereich des Punktrasters des Berührungsdatensignals abgebildet. Dabei entspricht das Format der durch die Sensoren der Sensoranordnung auf Berührungen überwachten Fläche insbesondere dem Verhältnis der Bildpunkte in Breiten- und Höhenrichtung des Teilbereichs des Punktrasters. Dadurch wird es möglich, das Format der durch die Sensoren der Sensoranordnung auf Berührungen überwachten Fläche bei der Erzeugung des Berührungsdatensignals in ein anderes Format zu überführen. Da die tatsächlich überwachte Fläche auf lediglich einen Teilbereich des Punktrasters des Berührungsdatensignals abgebildet wird, kommt es zu keinen Verzerrungen. Es ist aus Sicht der das Signal auswertenden Datenverarbeitungseinrichtung lediglich so, dass in dem "übrigen" Bereich des Punktrasters, der nicht der durch die Sensoren der Sensoranordnung auf Berührungen überwachten Fläche entspricht, keine Berührungsereignisse registriert werden.

Vorteilhafterweise ist nun die durch die Sensoren der Sensoranordnung auf Berührungen überwachte Fläche eine Teilfläche des durch die Projektionseinrichtung projizierten Bildes. In der Praxis bedeutet dies, dass lediglich in einem Teil des projizierten Bildes Berührungen erkannt werden können, für diesen Teil des projizierten Bildes lässt sich jedoch ein im Hinblick auf die Situation in der Küchenmöbelanordnung günstiges Format mit großem Verhältnis von Breite zu Höhe wählen.

Erfindungsgemäß führt das von der Datenverarbeitungseinrichtung erzeugte Bilddatensignal dazu, dass der auf die nicht durch die Sensoren der Sensoranordnung auf Berührungen überwachten Fläche projizierter Teil des projizierten Bildes lediglich ein schwarzer Bildbereich ist und/oder wobei der Strahlengang zu diesem Bildbereich unterbrochen ist. Der Strahlengang kann beispielsweise durch ein fest montiertes oder abnehmbares, starres oder bewegliches Element unterbrochen sein. Ein schwarzer Bildbereich bedeutet im Hinblick auf die Projektion des Bildes, dass kein Licht von der Projektionsanordnung in diesen Bildbereich projiziert wird. Von der Datenverarbeitungseinrichtung wird dieser Teil des Bildes lediglich als schwarzer und insbesondere ansonsten nicht genutzter Bildbereich behandelt. Auf diese Weise wird in der Praxis ein Effekt erzielt, als würde das Format des projizierten Bildes dem Format der durch die Sensoren der Sensoranordnung auf Berührungen überwachten Fläche entsprechen.

Erfindungsgemäß wird nur ein Teil des projizierten Bildes auf die Projektionsfläche projiziert, wobei der nicht auf die Projektionsfläche projizierte Teil des projizierten Bildes zumindest ein Teil des Schwarzbildbereichs und/ oder des Bildbereichs mit dem unterbrochenen Strahlengang ist. Mit anderen Worten wird zumindest ein Teil des schwarzen Bildbereichs nicht auf die Projektionsfläche, sondern beispielsweise auf die Arbeitsplatte projiziert. Da in dem schwarzen Bildbereich in der Praxis keine Projektion von Licht in diesen Bereich stattfindet, entsteht für den Nutzer der Eindruck, der projizierte Bildbereich befände sich lediglich bestimmungsgemäß auf der Projektionsfläche.

Weitere praktische Ausführungsformen und Vorteile der Erfindung sind nachfolgend im Zusammenhang mit den Zeichnungen beschrieben. Es zeigen:
- Fig. 1: eine schematische Darstellung einer beispielhaften Küchenmöbelanordnung in einer Frontansicht,
- Fig. 2: eine schematische Schnittdarstellung einer beispielhaften Küchenmöbelanordnung von der Seite,
- Fig. 3: eine schematische Schnittdarstellung des Bereichs oberhalb der Arbeitsplatte einer beispielhaften Küchenmöbelanordnung mit schematisch dargestelltem Strahlengang,
- Fig. 4: eine schematische Darstellung der genutzten und ungenutzten Teilbereiche der Punktraster.

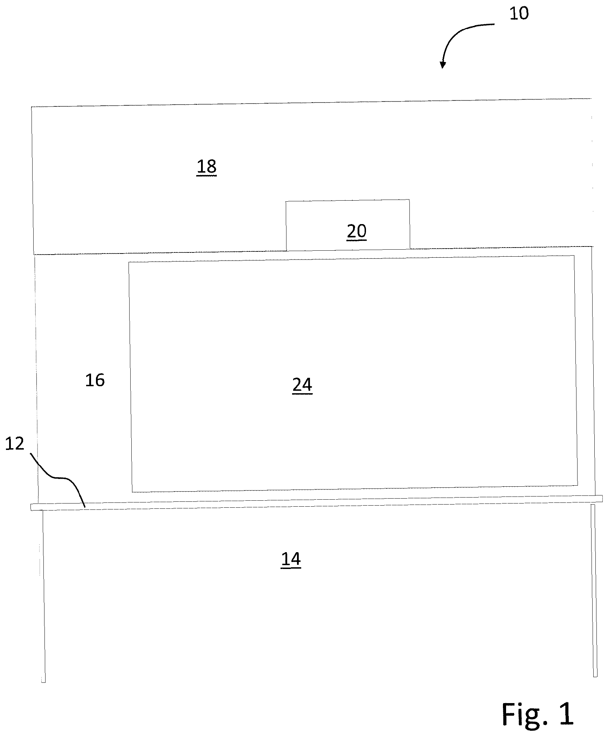

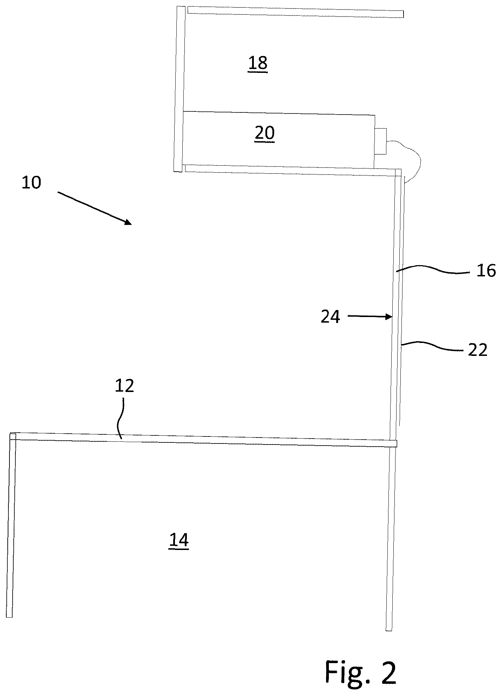

Die Küchenmöbelanordnung 10, wie sie in den Figuren 1 und 2 schematisch dargestellt ist, weist eine Arbeitsplatte 12 auf. Unterhalb der Arbeitsplatte 12 können, wie in den Figuren 1 und 2 lediglich schematisch angedeutet, Küchenunterschränke 14 angeordnet sein. Ein flächiges Verkleidungselement 16 erstreckt sich im Bereich der hinteren Kante der Arbeitsplatte 12 in vertikaler Richtung nach oben, in dem in den Figuren 1-3 gezeigten Beispiel bis zu den oberhalb der Arbeitsplatte 12 angeordneten Küchenoberschränken 18.

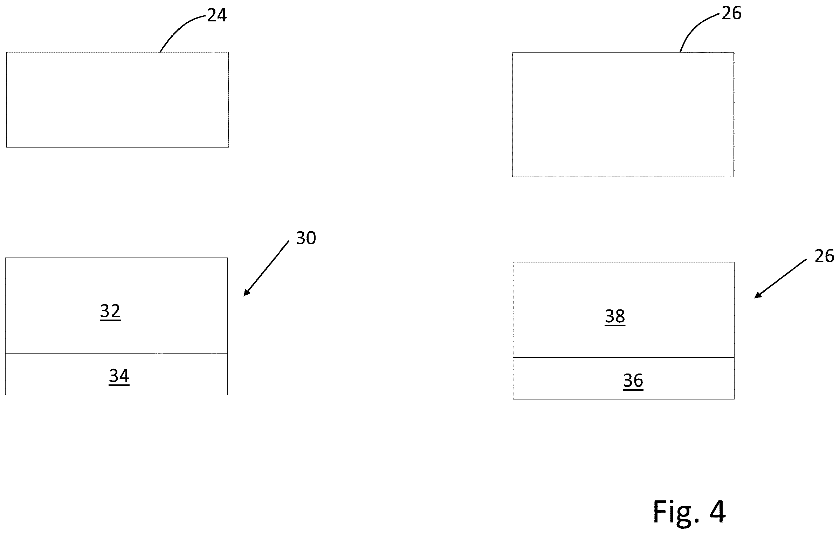

Die Küchenmöbelanordnung 10 weist eine oberhalb der Arbeitsplatte 12 angeordnete Projektionseinrichtung 20 auf. Diese kann wie im gezeigten Beispiel in einem Küchenoberschrank 18, insbesondere einen separaten abgetrennten Bereich eines Küchenoberschrankes 18 angeordnet sein. Wie in den Figuren 1 bis 3 dargestellt, ist auf der von der Projektionseinrichtung 20 abgewandten Seite des Verkleidungselements 16 eine Sensoranordnung 22 angeordnet. Auf der von der Sensoranordnung 22 abgewandten, d. h. der Projektionseinrichtung 20 zugewandten Seite des Verkleidungselements 16 befindet sich eine Projektionsfläche 24. Diese entspricht in ihren Abmessungen der von den Sensoren der Sensoranordnung 22 überwachten Fläche. In Figur 4 ist schematisch das Format der Projektionsfläche 24 dargestellt. Dieses Format entspricht dem Format der von der Sensoranordnung 22 überwachten Fläche. Im gezeigten Beispiel ist das Verhältnis der Breite zur Höhe 21:9. Ein derart breites Format der Projektionsfläche 24 ermöglicht ein großflächiges Bild, wobei die Höhe niedrig genug ist, um die praktischen Erfordernisse, die sich aus der typischen Geometrie der Küchenmöbelanordnung 10 ergeben, zu berücksichtigen.

Daneben ist schematisch das Format des von der Projektionseinrichtung 20 erzeugten Bildes 26 dargestellt. Dieses Format beträgt 16:9. Die Auflösung des projizierten Bildes kann beispielsweise 1920 Pixel x 1080 Pixel betragen.

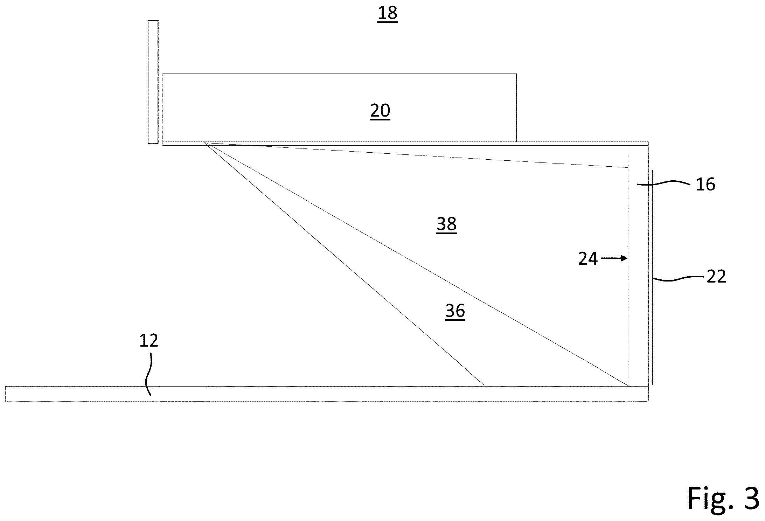

Um sicherzustellen, dass die Zuordnung der von der Sensoranordnung 22 erkannten Berührungen der Projektionsfläche 24 zu der richtigen Position in dem Bild 26 durch eine Datenverarbeitungseinrichtung erfolgt, die dazu eingerichtet ist, die Position einer erfassten Berührung auf der Projektionsfläche 24 einer Position auf dem projizierten Bild 26 zuzuordnen, können mittels einer Auswertungseinrichtung 28 zur Auswertung von Berührungssignalen der Sensoren der Sensoranordnung 22 aus den Berührungssignalen der Sensoren ein Berührungsdatensignal erzeugt werden. In dem Berührungsdatensignal können die Positionen der erfassten Berührungen Positionen einem Punktraster 30 zugeordnet sein. Dabei kann wie im gezeigten Beispiel die durch die Sensoren der Sensoranordnung 22 auf Berührungen überwachte Fläche lediglich einem Teilbereich 32 des Punktrasters 30 entsprechen. In einem weiteren Teilbereich 34 des Punktrasters 30 werden schlicht keine Berührungen erfasst, da dem weiteren Teilbereich 34 keine entsprechende Sensorik zugeordnet ist. Die "Bildauflösung" des Punktrasters 30 entspricht im gezeigten Beispiel der Bildauflösung des von der Projektionseinrichtung 20 erzeugten Bildes 26 mit dem Bildformat 16:9. Das von der Datenverarbeitungseinrichtung erzeugte Bilddatensignal führt nun im gezeigten Beispiel dazu, dass der auf die nicht durch die Sensoren der Sensoranordnung 22 auf Berührungen überwachten Fläche projizierte Teil 36 des projizierten Bildes 26 lediglich ein schwarzer Bildbereich ist. Dieser Bereich kann beispielsweise, wie in Figur 3 beispielhaft dargestellt, auf die Arbeitsplatte 12 projiziert sein. Auf den verbleibenden Teilbereich 38 kann nun ein Bild projiziert werden, dessen Format der Projektionsfläche 24 und damit der durch die Sensoren der Sensoranordnung 22 auf Berührungen überwachten Fläche entspricht.

### Bezugszeichenliste

- 10: Küchenmöbelanordnung
- 12: Arbeitsplatte
- 14: Küchenunterschränke
- 16: Verkleidungselement
- 18: Küchenoberschränke
- 20: Projektionseinrichtung
- 22: Sensoranordnung
- 24: Projektionsfläche
- 26: Bild
- 28: Auswertungseinrichtung
- 30: Punktraster
- 32: Teilbereich
- 34: weiterer Teilbereich
- 36: Teil des projizierten Bildes
- 38: Teilbereich

## Patentansprüche

1. Küchenmöbelanordnung (10) mit einer Arbeitsplatte (12) und einem flächigen Verkleidungselement (16), wobei das Verkleidungselement (16) im Bereich der hinteren Kante der Arbeitsplatte (12) angeordnet ist und eine sich von dem Bereich der hinteren Kante nach oben er- streckende Projektionsfläche (24) bildet, wobei oberhalb der Arbeitsplatte (12) eine Projektionseinrichtung (20) zum Projizieren eines Bildes (26) auf die Projektionsfläche (24) angeordnet ist,
**dadurch gekennzeichnet,**
**dass** die Küchenmöbelanordnung (10) eine auf der von der Projektionseinrichtung (20) abgewandten Seite des Verkleidungselements (16) angeordnete Sensoranordnung (22) mit Sensoren zum Erfassen von Berührungen der Projektionsfläche (24) durch Finger und/oder ein Zeigegerät aufweist, wobei die Küchenmöbelanordnung (10) eine Datenverarbeitungseinrichtung aufweist, die dazu eingerichtet ist, ein Berührungsdatensignal der Sensoranordnung (22) zu erfassten Berührungen zu empfangen und zu verarbeiten, wobei die Datenverarbeitungseinrichtung dazu eingerichtet ist, das durch die Projektionseinrichtung (20) projizierte Bild (26) mittels eines Bilddatensignals zu steuern, wobei die Datenverarbeitungseinrichtung dazu eingerichtet ist, die Position einer erfassten Berührung auf der Projektionsfläche (24) einer Position auf dem projizierten Bild (26) zuzuordnen, wobei die Datenverarbeitungseinrichtung dazu eingerichtet ist, in Abhängigkeit von der Zuordnung der Position einer erfassten Berührung zu einer Position auf dem projizierten Bild (26) eine der Position auf dem projizierten Bild (26) zugeordnete Funktion eines Computerprogramms aufzurufen, wobei die durch die Sensoren der Sensoranordnung (22) auf Berührungen überwachte Fläche eine Teilfläche des durch die Projektionseinrichtung (20) projizierten Bildes (26) ist, wobei das von der Datenverarbeitungseinrichtung erzeugte Bilddatensignal dazu führt, dass der auf die nicht durch die Sensoren der Sensoranordnung (22) auf Berührungen überwachte Fläche projizierte Teil des projizierten Bildes (26) lediglich ein schwarzer Bildbereich ist und/oder wobei der Strahlengang zu diesem Bildbereich unterbrochen ist.

2. Küchenmöbelanordnung (10) nach Anspruch 1, **dadurch gekennzeichnet, dass** die Küchenmöbelanordnung (10), insbesondere die Sensoranordnung (22), eine Auswertungseinrichtung (28) zur Auswertung von Berührungssignalen der Sensoren der Sensoranordnung (22) aufweist, wobei die Auswertungseinrichtung (28) dazu ausgebildet ist, aus den Berührungssignalen der Sensoren das Berührungsdatensignal zu erzeugen.

3. Küchenmöbelanordnung (10) nach Anspruch 1 oder 2, **dadurch gekennzeichnet, dass** die durch die Sensoren der Sensoranordnung (22) überwachte Fläche ein Verhältnis von Breite zu Höhe von wenigstens 18:9, insbesondere von wenigstens 21:9, aufweist,

4. Küchenmöbelanordnung (10) nach einem der vorigen Ansprüche, **dadurch gekennzeichnet, dass** das projizierte Bild (26) ein Verhältnis von Breite zu Höhe von höchstens 21:7, insbesondere höchstens 16:4, aufweist.

5. Küchenmöbelanordnung (10) nach einem der vorigen Ansprüche, **dadurch gekennzeichnet, dass** in dem Berührungsdatensignal die Positionen der erfassten Berührungen Positionen einem Punktraster (30) zugeordnet sind, wobei die durch die Sensoren der Sensoranordnung (22) auf Berührungen überwachte Fläche lediglich einem Teilbereich (32) des Punktrasters (30) entspricht und die Positionen der erfassten Berührungen lediglich Positionen in diesem Teilbereich (32) zugeordnet sind.

6. Küchenmöbelanordnung (10) nach Anspruch 5, **dadurch gekennzeichnet, dass** das Verhältnis von Breite zu Höhe der durch die Sensoren der Sensoranordnung (22) auf Berührungen überwachten Fläche dem Verhältnis der Anzahl der Punkte in Breiten- und Höhenrichtung des Teilbereichs (32) des Punktrasters (30) entspricht.

7. Küchenmöbelanordnung (10) nach einem der vorigen Ansprüche, **dadurch gekennzeichnet, dass** das Format des Punktrasters (30) des Berührungsdatensignals dem Format des Punktrasters (30) des projizierten Bildes (26) entspricht.

8. Küchenmöbelanordnung (10) nach einem der vorigen Ansprüche, **dadurch gekennzeichnet, dass** lediglich ein Teil des projizierten Bildes (26) auf die Projektionsfläche (24) projiziert wird, insbesondere wobei es sich bei dem nicht auf die Projektionsfläche (24) projizierten Teil des projizierten Bildes (26) um zumindest einen Teil des schwarzen Bildbereichs und/oder des Bildbereichs mit dem unterbrochenen Strahlengang handelt.

## Claims

1. Kitchen furniture arrangement (10) having a worktop (12) and a flat lining element (16), wherein the lining element (16) is disposed in the area of the rear edge of the worktop (12), forming a projection surface (24) extending upward from the area of the rear edge, wherein a projection device (20) for projecting an image (26) onto the projection surface (24) is disposed above the worktop (12),
**characterized in that**
the kitchen furniture arrangement (10) comprises a sensor arrangement (22) disposed on the side of the lining element (16) facing away from the projection device (20) and having sensors for detecting the projection surface (24) being touched by fingers and/or a pointing device, wherein the kitchen furniture arrangement (10) comprises a data processing device being configured to receive and process a touch data signal of the sensor arrangement (22) with respect to detected touches, wherein the data processing device is configured to control the image (26) projected by the projection device (20) by means of an image data signal, wherein the data processing device is configured to associate the position of a detected touch on the projection surface (24) with a position on the projected image (26), wherein the data processing device is configured to call up, depending on the association of the position of a detected touch with a position on the projected image (26), a function of a computer program associated with the position on the projected image (26), wherein the surface monitored for touches by the sensors of the sensor arrangement (22) is a subarea of the image (26) projected by the projection device (20), wherein the image data signal generated by the data processing device leads to that part of the projected image (26) projected onto the surface not monitored for touches by the sensors of the sensor arrangement (22) being merely a black image region and/or wherein the beam path leading to this image region is interrupted.

2. Kitchen furniture arrangement (10) according to claim 1, **characterized in that** the kitchen furniture arrangement (10), in particular the sensor arrangement (22), comprises an evaluation equipment (28) for evaluating touch signals of the sensors of the sensor arrangement (22), wherein the evaluation equipment (28) is configured to generate the touch data signal from the touch signals of the sensors.

3. Kitchen furniture arrangement (10) according to claim 1 or 2, **characterized in that** the surface monitored by the sensors of the sensor arrangement (22) has a width-to-height ratio of at least 18:9, in particular of at least 21:9.

4. Kitchen furniture arrangement (10) according to one of the preceding claims, **characterized in that** the projected image (26) has a width-to-height ratio of at most 21:7, in particular at most 16:4.

5. Kitchen furniture arrangement (10) according to one of the preceding claims, **characterized in that** in the touch data signal, the positions of the detected touches are associated with positions in a dot matrix (30), wherein the surface monitored for touches by the sensors of the sensor arrangement (22) corresponds merely to a subregion (32) of the dot matrix (30) and the positions of the detected touches are associated merely with positions in this subregion (32).

6. Kitchen furniture arrangement (10) according to claim 5, **characterized in that** the width-to-height ratio of the surface monitored for touches by the sensors of the sensor arrangement (22) corresponds to the ratio of the number of dots in the width direction to the number of dots in the height direction of the subregion (32) of the dot matrix (30).

7. Kitchen furniture arrangement (10) according to one of the preceding claims, **characterized in that** the format of the dot matrix (30) of the touch data signal corresponds to the format of the dot matrix (30) of the projected image (26).

8. Kitchen furniture arrangement (10) according to one of the preceding claims, **characterized in that** merely a part of the projected image (26) is projected onto the projection surface (24), in particular wherein the part of the projected image (26) not projected onto the projection surface (24) is at least a part of the black image region and/or of the image region having the interrupted beam path.

## Revendications

1. Agencement de meuble de cuisine (10) avec un plan de travail (12) et un élément d'habillage (16) plat, l'élément d'habillage (16) étant disposé dans la zone du bord arrière du plan de travail (12) et formant une surface de projection (24) s'étendant vers le haut à partir de la zone du bord arrière, un dispositif de projection (20) étant disposé au-dessus du plan de travail (12) pour projeter une image (26) sur la surface de projection (24),
**caractérisé en ce que**
l'agencement de meuble de cuisine (10) comprend un agencement de capteurs (22) disposé sur le côté de l'élément d'habillage (16) opposé au dispositif de projection (20), avec des capteurs pour détecter des contacts entre la surface de projection (24) et un doigt et/ou un dispositif de pointage, l'agencement de meuble de cuisine (10) comprenant un dispositif de traitement de données configuré pour recevoir et traiter un signal de données de contact de l'agencement de capteurs (22) relatif à des contacts détectés, le dispositif de traitement de données étant configuré pour commander l'image (26) projetée par le dispositif de projection (20) au moyen d'un signal de données d'image, le dispositif de traitement de données étant configuré pour associer la position d'un contact détecté sur la surface de projection (24) à une position sur l'image projetée (26), le dispositif de traitement de données étant configuré pour, en fonction de l'association de la position d'un contact détecté à une position sur l'image projetée (26), appeler une fonction d'un programme informatique associée à la position sur l'image projetée (26), la surface surveillée par les capteurs de l'agencement de capteurs (22) concernant des contacts étant une surface partielle de l'image projetée (26) par le dispositif de projection (20), le signal de données d'image généré par le dispositif de traitement de données conduisant à ce que la partie de l'image projetée (26) qui est projetée sur la surface non surveillée par les capteurs de l'agencement de capteurs (22) concernant des contacts n'est qu'une zone d'image noire et/ou le trajet optique vers cette zone d'image étant interrompu.

2. Agencement de meuble de cuisine (10) selon la revendication 1, **caractérisé en ce que** l'agencement de meuble de cuisine (10), en particulier l'agencement de capteurs (22), comprend un dispositif d'évaluation (28) pour évaluer les signaux de contact des capteurs de l'agencement de capteurs (22), le dispositif d'évaluation (28) étant configuré pour générer le signal de données de contact à partir des signaux de contact des capteurs.

3. Agencement de meuble de cuisine (10) selon la revendication 1 ou 2, **caractérisé en ce que** la surface surveillée par les capteurs de l'agencement de capteurs (22) présente un rapport largeur/hauteur d'au moins 18:9, en particulier d'au moins 21:9.

4. Agencement de meuble de cuisine (10) selon l'une des revendications précédentes, **caractérisé en ce que** l'image projetée (26) présente un rapport largeur/hauteur d'au plus 21:7, en particulier d'au plus 16:4.

5. Agencement de meuble de cuisine (10) selon l'une des revendications précédentes, **caractérisé en ce que**, dans le signal de données de contact, les positions des contacts détectés sont associées à une grille de points (30), la surface surveillée par les capteurs de l'agencement de capteurs (22) concernant des contacts ne correspondant qu'à une zone partielle (32) de la grille de points (30) et les positions des contacts détectés n'étant associées qu'à des positions dans cette zone partielle (32).

6. Agencement de meuble de cuisine (10) selon la revendication 5, **caractérisé en ce que** le rapport de la largeur à la hauteur de la surface surveillée par les capteurs de l'agencement de capteurs (22) concernant des contacts correspond au rapport du nombre de points dans la direction de la largeur et de la hauteur de la zone partielle (32) de la grille de points (30).

7. Agencement de meuble de cuisine (10) selon l'une des revendications précédentes, **caractérisé en ce que** le format de la grille de points (30) du signal de données de contact correspond au format de la grille de points (30) de l'image projetée (26) .

8. Agencement de meuble de cuisine (10) selon l'une des revendications précédentes, **caractérisé en ce que** seule une partie de l'image projetée (26) est projetée sur la surface de projection (24), en particulier la partie de l'image projetée (26) qui n'est pas projetée sur la surface de projection (24) étant au moins une partie de la zone d'image noire et/ou de la zone d'image avec le trajet optique interrompu.
